# EUROPÄISCHE PATENTANMELDUNG

(11) **EP 2 618 522 A1**
(43) Veröffentlichungstag der Anmeldung: **24.07.2013**
(21) Anmeldenummer: 12151724.7
(22) Anmeldetag: 19.01.2012
(51) Int. Cl.: H04L 12/24, H04L 29/06, G05B 19/418, G06F 21/00

(54) **Verfahren zum rechnergestützten Entwurf einer Automatisierungsanlage**

(71) Anmelder: Siemens Aktiengesellschaft, 80333 München (DE)
(72) Erfinder: Haverkamp, Maik, 91083 Baiersdorf (DE); Teufel, Christian, 91344 Waischenfeld (DE)

(57) **Zusammenfassung**

Die Erfindung betrifft ein Verfahren zum rechnergestützten Entwurf einer Automatisierungsanlage. In dem erfindungsgemäßen Verfahren gibt eine Rechnereinheit an einer Benutzerschnittstelle eine Spezifikation zumindest eines Teils der Automatisierungsanlage aus, wobei die Spezifikation Geräte (CO1, CO2, CO3, ES1, ES2, ES3, FG) der Automatisierungsanlage und die Vernetzung der Geräte (CO1, CO2, CO3, ES1, ES2, ES3, FG) über ein Kommunikationsnetz umfasst. Ferner erfasst die Rechnereinheit eine oder mehrere Eingaben eines Benutzers an der Benutzerschnittstelle, mit denen Kommunikationsbeziehungen betreffend zugelassene und/oder unzulässige Kommunikationen (CO1, CO2, CO3, ES1, ES2, ES3, FG) zwischen Geräten (CO1, CO2, CO3, ES1, ES2, ES3, FG) im Kommunikationsnetz spezifiziert werden. Die Rechnereinheit ermittelt dabei Sicherheits-Konfigurationsparameter für Kommunikationskomponenten (FW1, FW2, FW3) zumindest eines Teils der Geräte (CO1, CO2, CO3, ES1, ES2, ES3, FG) entsprechend den Kommunikationsbeziehungen, wobei der oder die, zu einer jeweiligen Kommunikationskomponente (FW1, FW2, FW3) gehörigen Sicherheits-Konfigurationsparameter durch die jeweilige Kommunikationskomponente (FW1, FW2, FW3) verarbeitbar sind.

## Beschreibung

Die Erfindung betrifft ein Verfahren zum rechnergestützten Entwurf einer Automatisierungsanlage.

Aus dem Stand der Technik ist es bekannt, zum Entwurf von Automatisierungsanlagen entsprechende Engineering-Tools zu verwenden. Diese Tools sind auf einer Rechnereinheit hinterlegt und ermöglichen dem Anwender, durch Interaktion über eine Benutzerschnittstelle den Aufbau einer Automatisierungsanlage aus entsprechenden Geräten und deren Vernetzung über ein Kommunikationsnetz je nach Anforderung an die Anlage geeignet zu spezifizieren. In der Regel ist es in Automatisierungsanlagen erforderlich, bestimmte Kommunikationsbeziehungen zwischen Geräten in der Anlage festzulegen, um gesicherte Kommunikationsanforderungen zu erfüllen. Insbesondere soll oftmals nur der Datenaustausch zwischen bestimmten Automatisierungszellen zugelassen werden, um hierdurch Missbrauch im Betrieb der Automatisierungsanlage zu vermeiden. Herkömmlicherweise muss ein Benutzer neben dem Engineering-Tool ein separates Tool aufrufen, in dem er dann manuell basierend auf vorbestimmten Kommunikationsbeziehungen geeignete sicherheitsrelevante Konfigurationsparameter von Kommunikationskomponenten eingibt, über welche die gewünschten Kommunikationen umgesetzt werden können.

Aufgabe der Erfindung ist es, ein Verfahren zum rechnergestützten Entwurf einer Automatisierungsanlage zu schaffen, mit dem auf einfache Weise Kommunikationsbeziehungen zwischen Geräten der Automatisierungsanlage berücksichtigt werden können.

Diese Aufgabe wird durch das Verfahren gemäß Patentanspruch 1 bzw. die Vorrichtung gemäß Patentanspruch 10 bzw. das Computerprogrammprodukt gemäß Patentanspruch 12 bzw. das Computerprogramm gemäß Patentanspruch 13 gelöst. Weiterbildungen der Erfindung sind in den abhängigen Ansprüchen definiert.

Das erfindungsgemäße Verfahren dient zum rechnergestützten Entwurf einer Automatisierungsanlage. Bei der Automatisierungsanlage kann es sich um ein beliebiges industrielles Automatisierungssystem, wie z.B. eine Anlage zur Fertigungsautomatisierung oder eine Anlage zur Prozessautomatisierung, handeln.

Im erfindungsgemäßen Verfahren gibt eine Rechnereinheit eine Spezifikation zumindest eines Teils der Automatisierungsanlage aus. Die Spezifikation umfasst dabei Geräte der Automatisierungsanlage und die Vernetzung der Geräte über ein Kommunikationsnetz. Ferner erfasst die Rechnereinheit eine oder mehrere Eingaben eines Benutzers an der Benutzerschnittstelle. Mit diesen Eingaben werden durch den Benutzer Kommunikationsbeziehungen betreffend zugelassene und/oder unzulässige Kommunikationen zwischen Geräten im Kommunikationsnetz spezifiziert. Erfindungsgemäß wird das Verfahren somit unter Verwendung einer Rechnereinheit im Rahmen einer über eine Benutzerschnittstelle durchgeführten Erstellung bzw. Veränderung einer Automatisierungsanlage durchgeführt. Dabei können neben den Kommunikationsbeziehungen ggf. auch andere Merkmale der Automatisierungsanlage, insbesondere die Geräte und deren Vernetzung, über Benutzereingaben verändert werden.

Im Rahmen des Verfahrens ermittelt die Rechnereinheit automatisch Sicherheits-Konfigurationsparameter für Kommunikationskomponenten zumindest eines Teils der Geräte entsprechend den Kommunikationsbeziehungen, wobei der oder die, zu einer jeweiligen Kommunikationskomponente gehörigen Sicherheits-Konfigurationsparameter durch die jeweilige Kommunikationskomponente verarbeitbar sind. Der Begriff der Sicherheits-Konfigurationsparameter ist hier und im Folgenden weit zu verstehen und kann jede Art von Konfigurationsparametern betreffen, welche Zugriffbeschränkungen in der Automatisierungsanlage festlegen.

Das erfindungsgemäße Verfahren zeichnet sich dadurch aus, dass entsprechende Kommunikationsbeziehungen zwischen Geräten automatisiert in geeignete Sicherheits-Konfigurationsparameter von solchen Kommunikationskomponenten gewandelt werden, welche die entsprechenden Kommunikationen zulassen bzw. blocken können. Die Vernetzung der Geräte wird somit durch die Rechnereinheit analysiert, um die für die jeweilige Kommunikationsbeziehung relevanten Kommunikationskomponenten und für diese die geeigneten Sicherheits-Konfigurationsparameter zu ermitteln. Die Sicherheits-Konfigurationsparameter können dann im Realbetrieb der Automatisierungsanlage von den Kommunikationskomponenten verarbeitet werden.

Die entsprechende Abbildung von Kommunikationsbeziehungen auf Sicherheits-Konfigurationsparameter wird erfindungsgemäß nicht manuell durch einen Benutzer, sondern über ein geeignetes Rechenprogramm durchgeführt. Die Erstellung eines entsprechenden Rechenprogramms hängt dabei von der Syntax zur Beschreibung der Kommunikationsbeziehung bzw. der Sicherheits-Konfigurationsparameter ab. Die Erstellung eines solchen Programms ist im Rahmen des Wissens eines Fachmanns problemlos realisierbar.

Das erfindungsgemäße Verfahren weist den Vorteil auf, dass im Rahmen eines einheitlichen Engineerings eine Automatisierungsanlage unter Einbeziehung entsprechender Sicherheitsanforderungen an die zur Kommunikation verwendeten Kommunikationskomponenten erstellt werden kann. Im Besonderen ist es nicht mehr erforderlich, dass der Anwender manuell Sicherheits-Konfigurationsparameter der Kommunikationskomponenten der Automatisierungsanlage spezifiziert. Vielmehr wird im Rahmen der Projektierung einer Automatisierungsanlage diese Information bereits generiert. Bei Inbetriebnahme der Automatisierungsanlage können dann die durch die Rechnereinheit ermittelten Sicherheits-Konfigurationsparameter über eine geeignete Ladefunktion an die entsprechenden Kommunikationskomponenten übertragen werden, so dass im Betrieb der Anlage die gewünschten Kommunikationsbeziehungen etabliert werden.

Das erfindungsgemäße Verfahren kann für beliebige Kommunikations-Standards eingesetzt werden, über welche die einzelnen Geräte der Anlage kommunizieren. In einer besonders bevorzugten Ausführungsform sind die Geräte der Anlage über ein Ethernet-basiertes Netz miteinander verbunden, insbesondere basierend auf den an sich bekannten Standards Industrial Ethernet und/oder Profinet.

Die Kommunikationskomponenten, mit denen Kommunikationsbeziehungen umgesetzt werden, können je nach Anwendungsfall unterschiedlich sein. In einer bevorzugten Ausführungsform handelt es sich dabei um eine oder mehrere Firewalls bzw. NAT-Router (NAT = Network Address Translation). Ebenso können die in der Automatisierungsanlage verbauten Geräte verschieden ausgestaltet sein. Vorzugsweise handelt es sich um ein oder mehrere Feldgeräte und/oder um eine oder mehrere Steuerungen, insbesondere SPS-Steuerungen (SPS = Speicherprogrammierbare Steuerung) und/oder um einen oder mehrere Ethernet-Switches. Diese Komponenten sind an sich bekannte Geräte von Automatisierungsanlagen. Die Feldgeräte stellen dabei insbesondere Sensoren und/oder Aktoren zur Durchführung entsprechender Prozesse der Automatisierungsanlage bzw. zur Erfassung von Messgrößen der Anlage dar. Vorzugsweise wird dabei eine Gruppe von Feldgeräten über eine Steuerung gesteuert. Über die Ethernet-Switches werden Verbindungen zwischen Feldgeräten bzw. Steuerungen geschaffen.

Die über Benutzereingaben festgelegten Kommunikationsbeziehungen können sich je nach Anwendungsfall in ihrem Detaillierungsgrad unterscheiden. Zumindest legen diese Kommunikationsbeziehungen fest, ob eine bestimmte Kommunikation zwischen zwei oder mehr Geräten zugelassen werden soll und/oder nicht zugelassen werden soll. Zumindest teilweise können die Kommunikationsbeziehungen dabei ferner die Zugriffsart von vorbestimmten Geräten aufeinander, insbesondere einen unidirektionalen und/oder bidirektionalen Zugriff und/oder einen Lese- und/oder Schreibzugriff, und/oder die zur Kommunikation zwischen vorbestimmten Geräten zu verwendenden Ports enthalten.

Je nach verwendetem Kommunikations-Standard bzw. nach verwendeten Kommunikationskomponenten können auch die Sicherheits-Konfigurationsparameter unterschiedlich ausgestaltet sein. Insbesondere können die Sicherheits-Konfigurationsparameter eine oder mehrere Zugriffslisten und/oder Firewall-Regeln und/oder Regeln für VPN-Verbindungen (VPN = Virtual Private Network) umfassen. Vorzugsweise werden die Sicherheits-Konfigurationsparameter unter Verwendung von IP-Adressen bzw. Namen der Geräte spezifiziert.

In einer weiteren, bevorzugten Ausführungsform der Erfindung wird ferner eine Benutzerauthentisierung durchgeführt, bevor über die Benutzerschnittstelle Kommunikationsbeziehungen betreffend zugelassene und/oder unzulässige Kommunikationsbeziehungen spezifiziert werden. Auf diese Weise kann die sicherheitskritische Festlegung von Kommunikationsbeziehungen nur auf einen vorbestimmten Nutzerkreis eingeschränkt werden.

In einer weiteren, besonders bevorzugten Ausführungsform wird im Rahmen des erfindungsgemäßen Verfahrens eine Benutzerschnittstelle in der Form einer graphischen Benutzeroberfläche verwendet, über welche einfach und intuitiv die entsprechende Automatisierungsanlage bzw. die Kommunikationsbeziehungen der Geräte untereinander projektiert werden können.

Neben dem oben beschriebenen Verfahren betrifft die Erfindung ferner eine Vorrichtung zum rechnergestützten Entwurf einer Automatisierungsanlage umfassend eine Rechnereinheit und eine Benutzerschnittstelle, welche derart ausgestaltet sind, dass im Betrieb der Vorrichtung das erfindungsgemäße Verfahren bzw. eine oder mehrere bevorzugte Varianten des erfindungsgemäßen Verfahrens durchgeführt werden können.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einer Rechnereinheit mit Benutzerschnittstelle ausgeführt wird.

Ferner umfasst die Erfindung ein Computerprogramm zur Durchführung des erfindungsgemäßen Verfahrens bzw. einer oder mehrerer bevorzugter Varianten des erfindungsgemäßen Verfahrens, wenn das Programm auf einer Rechnereinheit mit Benutzerschnittstelle abläuft.

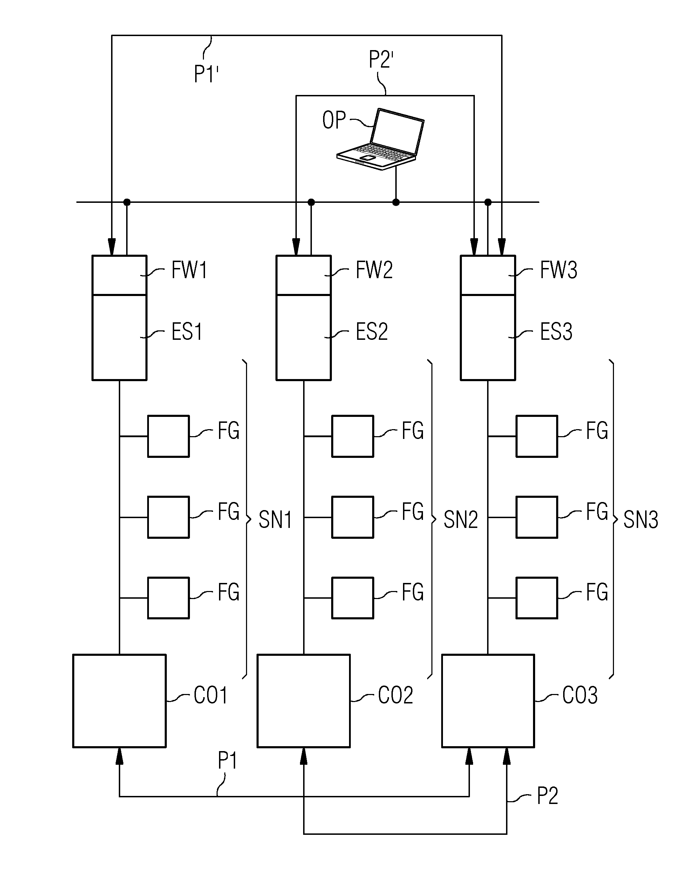

Ein Ausführungsbeispiel der Erfindung wird nachfolgend anhand der beigefügten Fig. 1 detailliert beschrieben. Diese Figur zeigt die über eine Benutzerschnittstelle wiedergegebene graphische Darstellung eines Teils einer Automatisierungsanlage, welcher basierend auf einer Ausführungsform des erfindungsgemäßen Verfahrens entworfen wird.

Die im Folgenden erläuterte Ausführungsform der Erfindung wird basierend auf einem sog. Engineering-Tool erläutert, mit dem entsprechende Anwender den Aufbau einer Automatisierungsanlage und deren Vernetzung über eine Interaktion an einer graphischen Benutzeroberfläche spezifizieren können. Das Engineering-Tool läuft dabei auf einer Rechnereinheit, die mit einem Monitor verbunden ist, auf dem die graphische Benutzeroberfläche des Tools wiedergegeben wird.

In Fig. 1 ist ein Teil einer über das Engineering-Tool projektierten Automatisierungsanlage wiedergegeben. Die Anlage umfasst miteinander vernetzte Geräte in der Form von drei SPS-Steuerungen CO1, CO2 und CO3, einer Vielzahl von Feldgeräten FG, drei Ethernet-Switches ES1, ES2 und ES3 sowie einer als Computer angedeuteten Schnittstelle OP (OP = Operator Panel), über die ein Operator die Automatisierungsanlage überwachen und steuern kann. Die in Fig. 1 dargestellten Linien sind Kommunikationsleitungen, über welche die Geräte miteinander kommunizieren können. Das hierdurch gebildete Kommunikationsnetz, welches vorzugsweise Ethernet-basiert ist, umfasst drei Subnetze SN1, SN2 und SN3. Das Subnetz SN1 umfasst die SPS-Steuerung CO1 und drei Feldgeräte FG und ist mit dem Rest des Netzes über den Ethernet-Switch ES1 verbunden. Das Subnetz SN2 umfasst die SPS-Steuerung CO2 und drei Feldgeräte FG, die über den Ethernet-Switch ES2 mit dem Rest des Netzes verbunden sind. Analog beinhaltet das Subnetz SN3 die SPS-Steuerung CO3 sowie drei Feldgeräte FG und den Ethernet-Switch ES3, der die Verbindung zum Rest des Kommunikationsnetzes herstellt. Die in Fig. 1 verwendeten Bezugszeichen dienen zur Spezifikation der einzelnen Geräte und sind in der ursprünglichen graphischen Darstellung nicht enthalten. Stattdessen zeigt die graphische Darstellung weitere Informationen betreffend die Gerätetypen und die IP-Adressen der einzelnen Geräte bzw. der Subnetze, die in Fig. 1 jedoch aus Übersichtlichkeitsgründen nicht wiedergegeben sind.

In der in Fig. 1 dargestellten Anlage enthalten die Ethernet-Switches ES1 bis ES3 jeweils eine Firewall FW1, FW2 bzw. FW3. Basierend auf diesen Firewalls können Sicherheitsfunktionalitäten in der Anlage realisiert werden. Insbesondere kann je nach Anforderungen sichergestellt werden, dass nur bestimmte Subnetze miteinander kommunizieren können. Die einzelnen Subnetze sind dabei z.B. vorbestimmte Automatisierungszellen der Automatisierungsanlage, welche je nach Anwendungsfall nur mit bestimmten anderen Automatisierungszellen Informationen austauschen sollen.

In einem herkömmlichen Engineering-Tool können zwar die einzelnen Geräte der Automatisierungsanlage und deren Vernetzung projektiert werden, jedoch muss zur Projektierung von entsprechenden Kommunikationsbeziehungen ein separates Tool aufgerufen werden, in dem dann manuell durch einen Benutzer basierend auf den gewünschten Kommunikationsbeziehungen entsprechende Sicherheits-Konfigurationsparameter der Kommunikationskomponenten eingegeben werden, über welche die Kommunikationsbeziehungen zwischen den Geräten umgesetzt werden. Die Kommunikationskomponenten sind dabei entsprechende, Sicherheitsfunktionalitäten bereitstellende Bestandteile in Geräten der Anlage. In der Ausführungsform der Fig. 1 sind die Firewalls FW1, FW2 und FW3 Beispiele von solchen Kommunikationskomponenten. Herkömmlicherweise müssen somit basierend auf zu realisierenden Kommunikationsbeziehungen händisch entsprechende Firewall-Regeln für die einzelnen Firewalls FW1 bis FW3 in ein separates Tool zur Projektierung von Kommunikationskomponenten eingegeben werden.

Im Unterschied hierzu wird in dem erfindungsgemäßen Engineering-Tool die Projektierung der entsprechenden Kommunikationskomponenten mit aufgenommen und automatisiert durchgeführt. Dabei hat der Benutzer die Möglichkeit, an der die entsprechenden Kommunikationsbeziehungen zwischen den Geräten über die Benutzeroberfläche geeignet einzugeben. In der Ausführungsform der Fig. 1 spezifiziert er dabei eine zugelassene Kommunikation zwischen der SPS-Steuerung CO1 und CO3 sowie eine zugelassene Kommunikation zwischen der SPS-Steuerung CO2 und CO3, wie durch die Doppelpfeile P1 und P2 angedeutet ist. Somit können graphisch über entsprechende Pfeile Kommunikationsbeziehungen festgelegt werden, wobei diese graphische Festlegung auch auf andere Weise erfolgen kann. In der Ausführungsform der Fig. 1 wird durch einen Doppelpfeil angedeutet, dass die über den Doppelpfeil verbundenen Geräte bidirektional miteinander kommunizieren können. Der Benutzer kann ggf. auch andere Arten von Kommunikationsbeziehungen, insbesondere eine unidirektionale Kommunikation, spezifizieren, die dann durch einen geeigneten Einfach-Pfeil angedeutet wird. Ebenfalls können ggf. weitere Informationen zu den Kommunikationsbeziehungen geeignet spezifiziert werden, wie z.B. entsprechende Ports, über welche die Kommunikation ablaufen soll, oder Zugriffsarten in der Form von Schreib- und/oder Lesezugriffen. Ebenso kann je nach Anwendungsfall auch spezifiziert werden, über welche zwischengeschalteten Geräte die Kommunikation ablaufen muss. In der Ausführungsform der Fig. 1 wird über die Doppelpfeile jedoch lediglich festgelegt, dass eine bidirektionale Kommunikation zwischen den Steuerungen CO1 und CO3 sowie CO2 und CO3 zuzulassen ist. Aufgrund der verwendeten Firewalls FW1, FW2 und FW3 für die Subnetze SN1 bis SN3 ist für die Kommunikationsbeziehungen als Standard zunächst eingestellt, dass die einzelnen Subnetze nicht untereinander kommunizieren können.

Basierend auf den über die Pfeile P1 und P2 spezifizierten Kommunikationsbeziehungen wird durch das Engineering-Tool nunmehr automatisiert die Kommunikationsstruktur der Automatisierungsanlage analysiert. Dabei wird festgestellt, dass eine Verbindung zwischen den SPS-Steuerungen CO1 und CO3 über die Ethernet-Switches ES1 und ES3 hergestellt werden kann, was durch den Pfeil P1' angedeutet ist. Ferner wird ermittelt, dass die Kommunikation zwischen den SPS-Steuerungen CO2 und CO3 über die Ethernet-Switches ES2 und ES3 hergestellt werden kann, was durch den Pfeil P2' angedeutet ist. Das Engineering-Tool erkennt, dass die einzelnen Ethernet-Switches ES1 bis ES3 entsprechende Firewalls FW1 bis FW3 enthalten und führt als Folge eine geeignete Konfiguration der Firewalls derart durch, dass die Kommunikation zwischen den Steuerungen CO1 und CO3 sowie CO2 und CO3 in bidirektionaler Richtung ermöglicht wird. Hierzu werden in an sich bekannter Weise geeignete Firewall-Regeln in den einzelnen Firewalls hinterlegt, mit denen ein Zugriff der über Internet-Adressen spezifizierten Ethernet-Switches untereinander zugelassen wird. Dabei wird auch sichergestellt, dass die Kommunikation zwischen der Steuerung CO1 und der Steuerung CO2 weiterhin nicht zugelassen wird. Die entsprechenden Firewall-Regeln werden dann im Engineering-Tool hinterlegt.

Wird schließlich zu einem späteren Zeitpunkt die basierend auf dem Tool entworfene Automatisierungsanlage in Betrieb genommen, so können über eine Ladefunktion des Tools entsprechende Projektierungsinformationen an alle notwendigen Geräte verteilt werden. Diese Informationen umfassen nunmehr auch die automatisiert erstellten Sicherheits-Konfigurationsparameter der Firewalls, über welche dann die Kommunikationsbeziehung zwischen den Geräten eingerichtet werden.

Die im Vorangegangenen beschriebene Ausführungsform der Erfindung wurde basierend auf der Konfiguration von Kommunikationskomponenten in der Form Firewalls erläutert. Die Erfindung kann jedoch auch für beliebige andere Kommunikationskomponenten in entsprechenden Geräten der Automatisierungsanlage verwendet werden. Insbesondere können anstatt der in den Ethernet-Switches verwendeten Firewalls bzw. zusätzlich dazu auch NAT-Router (NAT = Network Address Translation) vorhanden sein, für welche dann ebenfalls geeignete Sicherheits-Konfigurationsparameter bestimmt werden. Mit diesen Routern wird es ermöglicht, dass die außerhalb der Subnetze verwendeten IP-Adressen auf lokale IP-Adressen innerhalb der Subnetze abgebildet werden.

Das erfindungsgemäße Verfahren weist eine Reihe von Vorteilen auf. Insbesondere wird eine schnelle und kostengünstige Inbetriebnahme für sichere Kommunikationsbeziehungen zwischen entsprechenden Geräten der Automatisierungsanlage ermöglicht. Es ist dabei kein Fachwissen erforderlich, da das Engineering-Tool selbsttätig die notwendigen Einstellungen der entsprechenden Kommunikationskomponenten gemäß den vom Benutzer spezifizierten Kommunikationsbeziehungen vorgibt. Es kann hierdurch eine konsistente Projektierung der Automatisierungsanlage und ein automatischer Abgleich der Projektierungsdaten verschiedener Benutzer durch das Engineering-Tool sichergestellt werden.

## Patentansprüche

1. Verfahren zum rechnergestützten Entwurf einer Automatisierungsanlage, bei dem
- eine Rechnereinheit an einer Benutzerschnittstelle eine Spezifikation zumindest eines Teils der Automatisierungsanlage ausgibt, wobei die Spezifikation Geräte (CO1, CO2, CO3, ES1, ES2, ES3, FG) der Automatisierungsanlage und die Vernetzung der Geräte (CO1, CO2, CO3, ES1, ES2, ES3, FG) über ein Kommunikationsnetz umfasst;
- die Rechnereinheit eine oder mehrere Eingaben eines Benutzers an der Benutzerschnittstelle erfasst, mit denen Kommunikationsbeziehungen betreffend zugelassene und/oder unzulässige Kommunikationen (CO1, CO2, CO3, ES1, ES2, ES3, FG) zwischen Geräten (CO1, CO2, CO3, ES1, ES2, ES3, FG) im Kommunikationsnetz spezifiziert werden;
- die Rechnereinheit Sicherheits-Konfigurationsparameter für Kommunikationskomponenten (FW1, FW2, FW3) zumindest eines Teils der Geräte (CO1, CO2, CO3, ES1, ES2, ES3, FG) entsprechend den Kommunikationsbeziehungen ermittelt, wobei der oder die, zu einer jeweiligen Kommunikationskomponente (FW1, FW2, FW3) gehörigen Sicherheits-Konfigurationsparameter durch die jeweilige Kommunikationskomponente (FW1, FW2, FW3) verarbeitbar sind.

2. Verfahren nach Anspruch 1, bei dem das Kommunikationsnetz ein Ethernet-basiertes Netz ist, insbesondere basierend auf Industrial Ethernet und/oder Profinet.

3. Verfahren nach Anspruch 1 oder 2, bei dem die Kommunikationskomponenten eine oder mehrere Firewalls (FW1, FW2, FW3) und/oder NAT-Router umfassen.

4. Verfahren nach einem der vorhergehenden Ansprüche, bei dem die Geräte (CO1, CO2, CO3, ES1, ES2, ES3, FG) ein oder mehrere Feldgeräte (FG) und/oder eine oder mehrere Steuerungen (CO1, CO2, CO3) und/oder einen oder mehrere Ethernet-Switches (ES1, ES2, ES3) umfassen.

5. Verfahren nach einem der vorhergehenden Ansprüche, bei dem die Kommunikationsbeziehungen zumindest teilweise die Zugriffsart von vorbestimmten Geräten (CO1, CO2, CO3, ES1, ES2, ES3, FG) aufeinander, insbesondere einen unidirektionalen und/oder bidirektionalen Zugriff und/oder einen Lese- und/oder Schreibzugriff, und/oder die zur Kommunikation zwischen vorbestimmten Geräten zu verwendenden Ports enthalten.

6. Verfahren nach einem der vorhergehenden Ansprüche, bei dem die Sicherheits-Konfigurationsparameter eine oder mehrere Zugriffslisten und/oder Firewall-Regeln und/oder Regeln für VPN-Verbindungen umfassen.

7. Verfahren nach einem der vorhergehenden Ansprüche, bei dem die Sicherheits-Konfigurationsparameter unter Verwendung von IP-Adressen der Geräte (CO1, CO2, CO3, ES1, ES2, ES3, FG) festgelegt werden.

8. Verfahren nach einem der vorhergehenden Ansprüche, bei dem eine Benutzerauthentisierung durchgeführt wird, bevor über die Benutzerschnittstelle Kommunikationsbeziehungen betreffend zugelassene und/oder unzulässige Kommunikationen (CO1, CO2, CO3, ES1, ES2, ES3, FG) spezifiziert werden.

9. Verfahren nach einem der vorhergehenden Ansprüche, bei dem die Benutzerschnittstelle eine graphische Benutzeroberfläche umfasst.

10. Vorrichtung zum rechnergestützten Entwurf einer Automatisierungsanlage umfassend eine Rechnereinheit und eine Benutzerschnittstelle, welche derart ausgestaltet sind, dass im Betrieb der Vorrichtung
- die Rechnereinheit an der Benutzerschnittstelle eine Spezifikation zumindest eines Teils der Automatisierungsanlage ausgibt, wobei die Spezifikation Geräte (CO1, CO2, CO3, ES1, ES2, ES3, FG) der Automatisierungsanlage und die Vernetzung der Geräte (CO1, CO2, CO3, ES1, ES2, ES3, FG) über ein Kommunikationsnetz umfasst;
- die Rechnereinheit eine oder mehrere Eingaben eines Benutzers an der Benutzerschnittstelle erfasst, mit denen Kommunikationsbeziehungen betreffend zugelassene und/oder unzulässige Kommunikationen (CO1, CO2, CO3, ES1, ES2, ES3, FG) zwischen Geräten (CO1, CO2, CO3, ES1, ES2, ES3, FG) im Kommunikationsnetz spezifiziert werden;
- die Rechnereinheit Sicherheits-Konfigurationsparameter für Kommunikationskomponenten (FW1, FW2, FW3) zumindest eines Teils der Geräte (CO1, CO2, CO3, ES1, ES2, ES3, FG) entsprechend den Kommunikationsbeziehungen ermittelt, wobei der oder die, zu einer jeweiligen Kommunikationskomponente (FW1, FW2, FW3) gehörigen Sicherheits-Konfigurationsparameter durch die jeweilige Kommunikationskomponente (FW1, FW2, FW3) verarbeitbar sind.

11. Vorrichtung nach Anspruch 10, welche zur Durchführung eines Verfahrens nach einem der Ansprüche 2 bis 9 ausgestaltet ist.

12. Computerprogrammprodukt mit einem auf einem maschinenlesbaren Träger gespeicherten Programmcode zur Durchführung eines Verfahrens nach einem der Ansprüche 1 bis 9, wenn der Programmcode auf einer Rechnereinheit mit Benutzerschnittstelle ausgeführt wird.

13. Computerprogramm zur Durchführung eines Verfahrens nach einem der Ansprüche 1 bis 9, wenn das Programm auf einer Rechnereinheit mit Benutzerschnittstelle abläuft.
